# EUROPEAN PATENT SPECIFICATION

(11) **EP 3 554 957 B1**
(45) Date of publication and mention of the grant of the patent: **05.05.2021**
(21) Application number: 18711397.2
(22) Date of filing: 07.01.2018
(51) Int. Cl.: B65D 43/02, A47G 19/22, B29C 45/14

(54) **LIDS FOR CUPS AND OTHER CONTAINERS AND METHOD FOR THEIR PRODUCTION**
DECKEL FÜR TASSEN UND ANDERE BEHÄLTER UND VERFAHREN ZU DEREN HERSTELLUNG
COUVERCLES POUR TASSES ET AUTRES RÉCIPIENTS ET LEUR PROCÉDÉ DE PRODUCTION

(30) Priority: 09.01.2017 GR 20170100004; 09.01.2017 GR 20170200001 U
(43) Date of publication of application: 23.10.2019
(73) Proprietor: Thrace Plastics Co S.A, 17455 Alimos (GR)
(72) Inventor: KALLIS, Vasileios, 45221 Ioannina (GR)
(74) Representative: Samuelides, Emmanuel
(86) International application number: PCT/IB2018/050097
(87) International publication number: WO 2018/127847

(56) References cited:
- EP-A1- 2 241 515
- WO-A1-2010/136065
- WO-A1-2011/014932

## Description

The invention refers to lids cups, mugs, receptacles or any container for goods, such as beverages, for example coffee. The containers may be of any material such as paper or plastic.

Known lids have an opening from where the user may drink or sip the beverage. The opening is covered after production with a label for reasons of hygiene. The label may be printed with messages regarding the content of the cup etc. The label may be laminated with adhesive to facilitate its attachment to the lid. Other known lids have a slot for a straw. Such a lid with a label covering an access area for a straw is disclosed in WO 2011/014932.

Document FR2903041 presents a method of production of containers by injection moulding with removable/detachable labels that is known as In Mould Labeling - abbreviation: IML. The method is applied for the production of containers to store food stuff in solid form.

European patent application EP2241515 presents an application of the IML method of production for the production of lids having attached and detachable spoons, which are covered by a label.

The object of the present invention is a lid that guarantees the necessary Cleanliness and hygiene and may be produced with no difficulties. A further object of the invention is to provide printing area on the labels. A further object of the invention is a method of production of such lids. A further object of the invention is a mould for the production of such lids.

The invention is defined in the independent claims.

According to the invention, a lid for a glass, cup, mug or other container has a wall with an opening and a detachable label over an area of the wall, which includes the opening, whereby the thickness of a continuous and non-interrupted first section of the wall, which is covered by the label, is greater from the thickness of at least a second section of the wall that is adjacent to the first section and in that the label is attached to the wall by In-Mold-Labeling process during the production of the lid.

Further according to the invention, a method of production of lid for a glass, cup, mug or other container for beverages is effected by moulding and comprises the following steps: i) providing a mould with a gate to guide the moulding material to a cavity of the mould that has a depth corresponding to the thickness of the lid, which cavity has a first zone and a second zone that is adjacent to the first zone, the depth of the first zone being greater than the depth of a second zone and the first zone having configuration means to configure an opening in the lid, ii) providing a label in the cavity, which label covers a region around the gate and at least partially the configuration means, iii) forcing the moulding material over one of the two faces of the label and iv) obtaining the lid with the label covering at least part of the opening of the lid and an area of the lid around the opening.

A mould according to the invention has a gate to guide the moulding material to a cavity of the mould. The mould has a depth corresponding to the thickness of the lid, which cavity has a first zone and a second zone that is adjacent to the first zone, the depth of the first zone being greater than the depth of a second zone and the first zone having configuration means to configure an opening in the lid.

Optional features offer further advantages when combined with the features of the independent claims. A lid or a method for the production of a lid according to the invention may include one or a combination of more than one optional features.

In an embodiment of the invention the wall of the lid has a central wall, a side wall and a lip and the opening is at least partially located at an elevated section of the central wall and is adjacent to the side wall. The continuous and non-interrupted first section may include areas of the central wall, the side wall and the lip.

In a further embodiment of a lid according to the invention, the thickness of the continuous and non-interrupted first section is 10% greater than at least the thickness of the second section. In a further embodiment of a lid according to the invention, the thickness of the continuous and non-interrupted first section is 10% to 20% greater than at least the thickness of the second section. Further according to the invention, a method of production of lid for a glass, cup, mug or other container for beverages is effected by moulding and comprises the following steps: i) providing a mould with a gate to guide the moulding material to a cavity of the mould that has a depth corresponding to the thickness of the lid, which cavity has a first zone and a second zone that is adjacent to the first zone, the depth of the first zone being greater than the depth of a second zone and the first zone having configuration means to configure an opening in the lid, ii) providing a label in the cavity, which label covers at least partially the configuration means, iii) forcing the moulding material over one of the two faces of the label and iv) obtaining the lid with the label covering at least part of the opening of the lid and an area of the lid around the opening.

The thickness of the second section may be in a range from 0.3 mm to 2 mm. The lid may be made from a material that includes polypropylene and/or the label may be made from a material that includes multilayer polyporpylene. In an example according to the invention the label has a face attached to the wall that is almost entirely covered by release coating.

In a preferred embodiment the label has a flap, which projects from the lid to facilitate the detachment of the label from, the lid. During production the label is placed partially in the cavity and the flap is outside the cavity.

During moulding, the moulding material that exits the gate fills faster the first zone rather than the second zone. The material flows from the gate towards the first zone with an almost radial flow, preferably along a path that is within the first zone. The gate is preferably located within the first one of the cavity of the mould.

The opening of a lid according to the invention, from which the user will suck the beverage, is sealed with a label as soon as the lid is produced and is removed from the lid until the user lifts the label from the lid. Thus, it is ensured that no foreign element will be inserted in the beverage, as long as the container, which contains it, is covered with such a lid. The label may be decorated or printed. The incorporation of the label with IML is an effective method of production that prevents the placement of a self-adhesive label later after the production of the lid.

A container with a lid having a label according to the invention may be used to carry a beverage safely, maintaining the aroma and temperature of the beverage and without spilling the liquid content. This effect is achieved in a controllable manner, so that with the fitting of the label on the lid during production, the subsequent fitting of other covers on the lid, using other means such as adhesives, which are not according to the hygiene norms, is not necessary and is avoided.

Preferred embodiments of the invention are described with reference to **Figures 1 to 5****,** whereby:
- **Figure 1** is a 3 dimensional view of the lid without the label covering the opening.
- **Figure 2** is a 3 dimensional view of the lid with the label covering the opening.
- **Figure 3** is a section of the mold that is used for the production of the lid according to the invention.
- **Figures 4a to 4f** present the flow of the material during the production of the lid using moulding. The figures present the diffusion of the material in the cavity of the mold, where the lid is produced as the moulding progresses. Figures 4a and 4f show schematically the flow at the beginning and at towards the end of the process respectively. The arrows show the flow of the moulding material, when moulding is effected according to the invention.
- **Figure** 5 is a 3 dimensional view of the lid with the label lifted to uncover the opening.

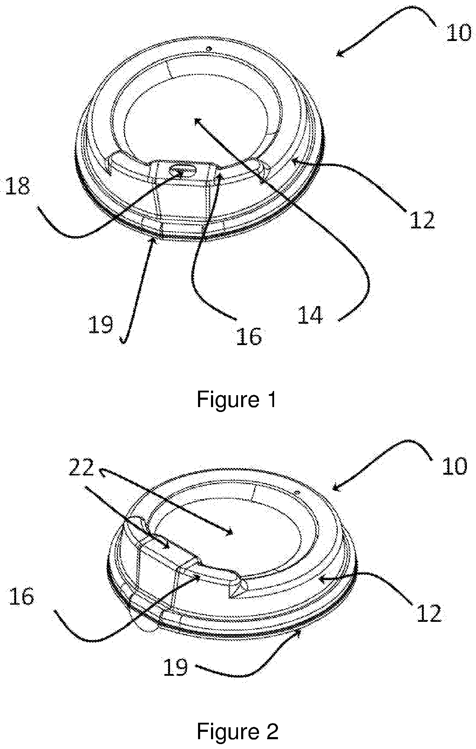

**Figure 1** shows an example of a lid **10** according to the invention. The lid **10** has a central wall **14** and a side wall **12.** The central wall **14** is configured on three levels. In this example the central wall **14** has a circular part, an annular part around the perimeter of the circular part and an elevated part **16** which projects from the annular part. The circular part, the annular part and the elevated part **16** are configured at three different levels with each level being at a distance from the other two. In the elevated part **16** there is an opening **18** from which the user drinks or sips the beverage that is contained in the cup or other receptacle or container, which is covered by the lid **10.** In the figures the lid **10** is circular but is may have other shapes, for example oval, rectangular etc. The side wall **12** extends almost perpendicular from the central wall **14** in the opposite direction from the elevated part **16,** which projects from the annular part. The side wall **12** has a lip **19** at its edge, which extends radially away from the central wall **14.**

The central wall **14** covers the cup or other receptacle of container, which is not shown in the figures. In the example of **Figure 1****,** the central wall **14** is almost circular. The opening **18** is located close to the circumference of the central wall **14,** in an elevated part **16** of the central wall **14.** When the lid **10** is in position covering the cup, the lip **19** is around the cup and the opening **18** is close to the edge of the opening of the cup.

The wall of the lid **10** has an outer face and an inner face. When the lid **10** covers the cup, the inner face faces the cup and the outer face is exposed to the environment. However, there is an area of the outer face, which includes the opening **18** and which is protected from the environment by a detachable or removable label **22.** The label **22** that covers the opening **18** may have difference shapes. The label **22** is attached to the outer face of the lid **10** during the production of the lid **10** by moulding. The moulding of the lid **10** with the label **22** attached to the outer face of the wall of the lid **10** is effected by In Mould Labeling - abbreviation IML. **Figure 1** shows the lid **10** without the label **22,** which has been removed to show the opening **18** and **Figure** 2 shows the label **22** covering the opening **18.**

The label **22** covers the opening **18** and is attached around it. In the example of **Figure 2****,** the detachable label **22** covers almost totally the circular part of the central wall **14** and it is incorporated in the lid **10** around the opening **18,** in the side wall **12** and in the lip **19.** An end of the label **22,** for example a flap, projects from the lip **19,** so as to facilitate the user to lift the label **22** and uncover the opening **18.** As an example, the material of the lid **10** may comprise polypropylene and the label **22** that is attached to the lid **10** by In-Mold-Labelling may comprise multilayer polypropylene. One face of the label **22** may be printed with information, instructions or other messages. The other face of the label **22** is preferably covered partially or totally with release coating to facilitate its detachment from the lid **10**. The lid **10** has a continuous and non-interrupted first section **60,** which has a thickness that is greater than the thickness of the at least a second section of the lid 10, which second section is adjacent to the first section. The thicker first section **60** may be totally or partially covered by the label **22.** In the examples shown in the Figures the thickness of the first section **60** of the lid **10** is 0.5 mm and the rest of the lid **10** has a thickness that is equal to 0.4 mm. In general the lid **10** has a thickness that is equal or greater than 0.3 mm and equal of smaller than 2 mm. The thickness of the first section **60** is usually 10% to 40% thicker that the thickness of the second section. The lid **10** may be made from polypropylene (PP) and the label **22** is a pre-printed label of polypropylene.

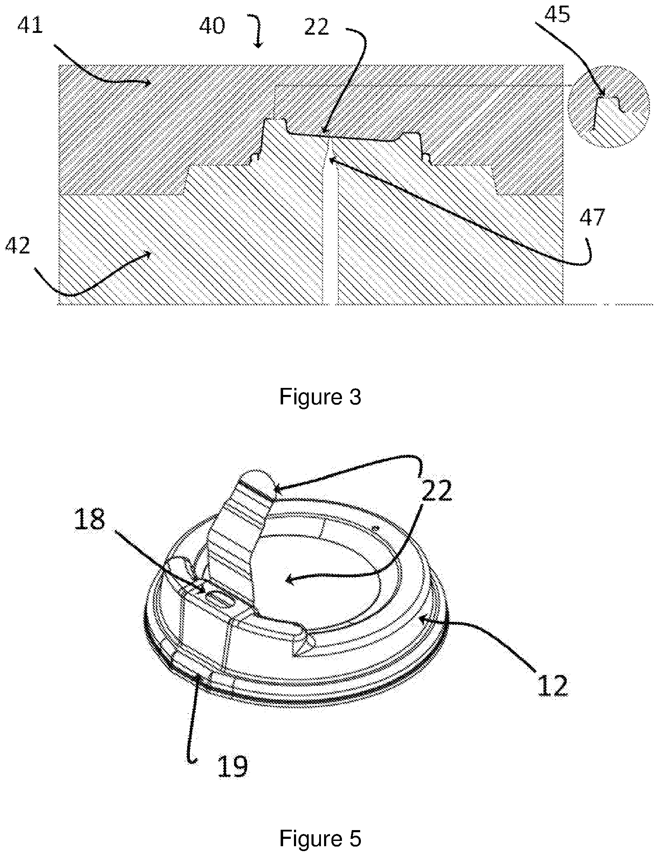

**Figure 3** shows a mould **40** according to the invention, which is used for the production of the lid **10.** The mould **40** has a female element **41** and a male element **42.** Between the female element **41** and the male element **42** there is a cavity for the production of the lid **10.** The depth of the cavity, i.e. the distance between the female element **41** and the male element **42,** corresponds to the thickness of the lid **10.** **Figure 3** shows an example of the mould **40,** where the female element **41** has a configuration, which forms the opening **18** of the lid **10.** In the detail of **Figure 3** the configuration is a projection **45.** The moulding material flows in the cavity through gate **47,** which is also shown in **Figure 3****.** The cavity of the mould **40** has a first zone and a second zone that is adjacent to the first zone. The depth of the first zone that corresponds to the thickness of the first section **60** of the lid **10** is greater than the depth of a second zone.

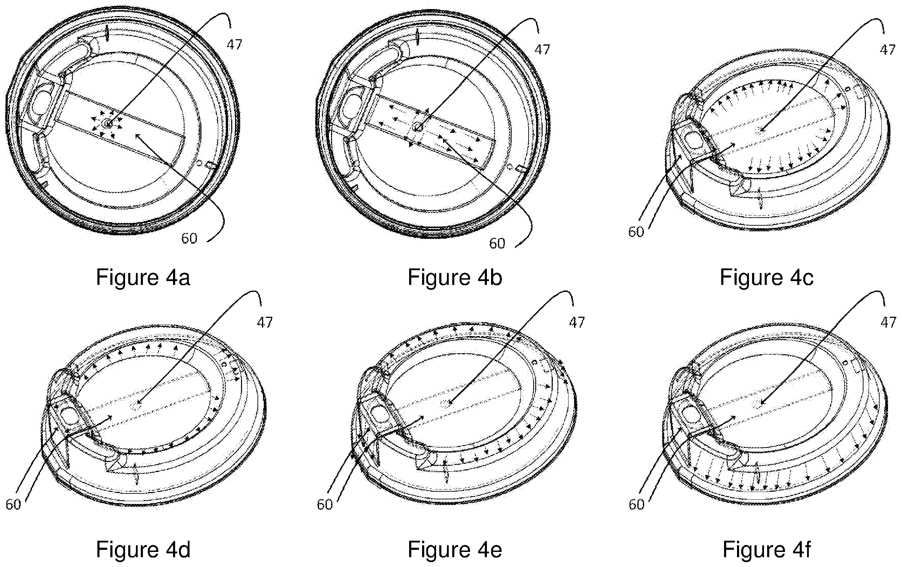

**Figures 4a to 4f** present the flow and the diffusion of the moulding material with time during the moulding of the lid **10,** i.e. **Figure 4a** illustrates the diffusion of the moulding material at the beginning of the production process, **Figure 4f** illustrates the moulding material short before the end of the production process and **Figures 4b, 4c, 4d,** 4e illustrate the flow and diffusion of material during the moulding process. The arrows in **Figures 4a to 4f** **show** schematically how the moulding material flows with time. The flow is depicted on a sketch of the lid **10,** which is under production.

Before the beginning of the moulding process of a lid **10,** a label **22** is placed in the area of the cavity of the mould **40** around the projection **45,** where the opening **18** of the mould **10** will be formed. Thus, the label **22** will cover the opening **18** and an area around the opening **18** on the outer face of the lid **10** under production, as it is presented in **Figure 3****.** Region 60 shown in **Figure 4** is a continuous and non-interrupted area of the lid **10** that is under production, which, when the lid **10** is produced, will have a thickness that is greater than the thickness of the rest of the lid **10** or at least of an area that is adjacent to region 60. The region 60 that is covered by the label **22,** is around gate **47** and extends in the central wall **14,** the side wall **12,** the lip **19** and surrounds the opening **18.** **Figures 4a and 4b** show the continuous and non-interrupted region 60 in the circular part of the central wall **14** of the lid **10** as the moulding material accumulates in this area and in **Figures 4c to 4f** after the volume is filled with the moulding material. The continuous and non-interrupted region 60 is depicted in **Figures 4a and 4b** with continuous lines and **Figures 4c** **έως 4f** with dashed lines.

**Figures 4** illustrate the moulding of the lid **10** according to the invention. The moulding material is guided initially to the first zone of the cavity, where the continuous and non-interrupted region **60** will be produced and subsequently it is diffused in other regions of the cavity of the mould **40.** As shown in **Figure 4b** the moulding material flows faster along the longitudinal direction of the first zone or the region **60** rather that transversely. **Figures 4b and 4c** illustrate that the moulding material reaches the part of the cavity, where the circumference of the circular part of the lid **10** will be produced and which is covered by the label **22, f**aster than it reaches other parts of the circumference. **Figures 4d and 4e** illustrate that the moulding material flows faster in the part of the cavity where the annular part and the lip **19** will be produced and which is covered by the label **22** rather than in the parts of the part of the cavity where the annular part and the lip **19** will be produced and which are at a distance from label **22.** **Figure 4f** illustrates that the moulding material flows in the part of the cavity, where side wall **12** will be formed and which is not covered by the label **22** after the moulding material fills the part of the cavity that corresponds to the side wall **12** of the lid **10** and which is covered by the label **22.** The moulding process that is illustrated in **Figures 4a** to **4f** has the advantage to prevent the moulding material to insert between the mould **40** and the label **22.** If the moulding material inserts between the mould **40** and the label **22,** the label **22** may be covered from both sides with moulding material. In such a case the label **22** may be captured and encased within the lid **10.**

The flow of the moulding material is illustrated by the arrows. One way to force the material to the region that is covered by label **22** at the beginning of the production process is the increase of the depth of the mould **40,** i.e. the increase of the distance between the female element **41** and the male element **42** of the mould **40,** in this region. The gate **47,** which is the outlet of the moulding material in the cavity, is also provided in the region, where the label **22** is provided during production. The increase of the thickness of the continuous and non-interrupted first zone of the mould **40** that correspond to the first section **60** of the lid 10, enables the diffusion of the moulding material in the zone with greater depth rather than in its neighboring zones with smaller depth, because the zone with greater depth provides less resistance to the flow of the moulding material. Thus, the moulding material is forced to fill the region of the cavity, where label **22** is provided, before it fills the other regions of the cavity of the mould **40.**

If the moudling material were not forced in the region where the label **10** is provided at the beginning of the moulding process, before neighboring regions, the moulding material may insert between the mould **40** and the label **22,** following a transverse flow across the circumference of the label **22** towards the region of the cavity that is covered by the label **22.**

**Figure 5** is a three-dimensional view of the lid **10** with the label **22** lifted to uncover the opening **18.** The label **22** of this embodiment covers almost all the circular part of the central wall **14.**

The label that covers the opening may be circular, rectangular, oval or it may have any shape. It may also be printed and/or embossed.

## Claims

1. Lid (10) for a glass, cup, mug or other container, which lid **(10)** has a wall **(12, 14, 19)** with an opening **(18)** and a detachable label **(22)** over an area of the wall **(12, 14, 19),** which area includes the opening **(18), characterized in that** the thickness of a continuous and non-interrupted first section **(60)** of the wall **(12, 14, 19),** which is covered by the label **(22),** is greater than the thickness of at least a second section of the wall **(12, 14, 19)** that is adjacent to the first section **(60)** and **in that** the label **(22)** is attached to the wall (12, 14, 19) by In-Mold-Labeling process during the production of the lid (10).

2. Lid (10) according to claim 1, whereby the wall (12, 14, 19) has a central wall (14), a side wall (12) and a lip (19), the opening (18) being at least partially located at an elevated section (16) of the central wall (14) and is adjacent to the side wall (12) and the continuous and non-interrupted first section (60) includes areas of the central wall (14), the side wall (12) and the lip (19).

3. Lid (10) according to claim 1 or claim 2, whereby the thickness of the continuous and non-interrupted first section (60) is 10% to 20% greater than at least the thickness of the second section.

4. Lid (10) according to claim 3, whereby the thickness of the second section is in a range from 0.3 mm to 2 mm.

5. Lid (10) according to any one of claims 1 to 4, whereby the material of the lid (10) includes polypropylene and the material of the label (22) includes multilayer polyporpylene.

6. Lid (10) according to any one of claims 1 to 5, whereby the label (22) has a face attached to the wall (12, 14, 19) and the face of the label (22) that is attached to the wall (12, 15, 19) is almost entirely covered by release coating.

7. Lid (10) according to any one of claims 1 to 6, whereby the label (22) is almost rectangular.

8. Lid (10) according to any one of claims 1 to 6, whereby the central wall (14) has a circular portion and an annular portion around and adjacent to the circular portion and the label (22) covers almost entirely the circular portion.

9. Lid (10) **according to any one of claims 1 to 8,** whereby the label (22) has a flap, which projects from the lid (10) to facilitate the detachment of the label (22) from the lid (10).

10. Cup or other container for beverages closed by a lid (10) **according to any one of claims 1 to 9.**

11. Method of production of a lid (10) according to claim 1, for a glass, cup, mug or other containers for beverages, whereby the production of the lid (10) is effected by moulding and the method comprises the following steps: i) providing a mould **(40)** with a gate **(47)** to guide the moulding material to a cavity of the mould **(40)** that has a depth corresponding to the thickness of the lid **(10),** which cavity **(40)** has a first zone and a second zone that is adjacent to the first zone, the depth of the first zone being greater than the depth of a second zone and the first zone having configuration means **(45)** to configure an opening **(18)** in the lid (10), ii) providing a label **(22)** in the cavity, which label **(22)** covers a region around the gate **(47)** and at least partially the configuration means **(45),** iii) forcing the moulding material over one of the two faces of the label **(22)** and iv) obtaining the lid **(10)** with the label **(22)** covering at least part of the opening **(18)** of the lid **(10)** and an area of the lid **(10)** around the opening **(18).**

12. Method **according to claim 11,** whereby the gate **(47)** is in the first zone and whereby during moulding the moulding material exiting the gate (47) fills faster the first zone rather than the second zone.

13. Method **according to claim 11 or claim 12,** whereby the gate **(47)** is in the first zone and whereby during moulding the moulding material flows from the gate **(47)** towards the first zone with an almost radial flow.

14. Method **according to any one of claims 11 to 13,** whereby the gate **(47)** is in the first zone and whereby during moulding the moulding material flows from the gate **(47)** towards the first zone along a path that is within the first zone.

15. Method **according to any one of the claims 11 to 14,** whereby the label **(22)** is placed partially in the cavity and a flap of the label **(22)** is outside the cavity.

## Patentansprüche

1. Deckel (10) für ein Glas, einen Becher, eine Tasse oder einen sonstigen Behälter, wobei der Deckel (10) eine Wand (12, 14, 19) mit einer Öffnung (18) und ein abnehmbares Etikett (22) über einer Fläche der Wand (12, 14, 19) aufweist, wobei die Fläche die Öffnung (18) umfasst, **dadurch gekennzeichnet, dass** die Dicke eines durchgängigen und nicht-unterbrochenen ersten Abschnitts (60) der Wand (12, 14, 19), der von dem Etikett (22) bedeckt ist, größer ist als die Dicke mindestens eines zweiten Abschnitts der Wand (12, 14, 19), der an den ersten Abschnitt (60) angrenzt, und dadurch, dass das Etikett (22) an der Wand (12, 14, 19) durch ein In-Mold-Labeling-Verfahren während der Herstellung des Deckels (10) befestigt wird.

2. Deckel (10) nach Anspruch 1, wobei die Wand (12, 14, 19) eine zentrale Wand (14), einen Seitenwand (12) und eine Lippe (19) aufweist, wobei sich die Öffnung (18) mindestens teilweise an einem erhöhten Abschnitt (16) der zentralen Wand (14) befindet und an die Seitenwand (12) angrenzt, und der durchgängige und nicht-unterbrochene erste Abschnitt (60) Flächen der zentralen Wand (14), der Seitenwand (12) und der Lippe (19) umfasst.

3. Deckel (10) nach Anspruch 1 oder Anspruch 2, wobei die Dicke des durchgängigen und nicht-unterbrochenen ersten Abschnitts (60) 10 % bis 20 % größer ist als mindestens die Dicke des zweiten Abschnitts.

4. Deckel (10) nach Anspruch 3, wobei die Dicke des zweiten Abschnitts in einem Bereich von 0,3 mm bis 2 mm liegt.

5. Deckel (10) nach einem der Ansprüche 1 bis 4, wobei das Material des Deckels (10) Polypropylen umfasst und das Material des Etiketts (22) Mehrschicht-Polypropylen umfasst.

6. Deckel (10) nach einem der Ansprüche 1 bis 5, wobei das Etikett (22) eine Seite aufweist, die an der Wand (12, 14, 19) befestigt ist, und die Seite des Etiketts (22), die an der Wand (12, 15, 19) befestigt ist, beinahe gänzlich von einer Trennbeschichtung bedeckt ist.

7. Deckel (10) nach einem der Ansprüche 1 bis 6, wobei das Etikett (22) beinahe rechteckig ist.

8. Deckel (10) nach einem der Ansprüche 1 bis 6, wobei die zentrale Wand (14) einen runden Teil und einen ringförmigen Teil um und angrenzend an den runden Teil aufweist und das Etikett (22) beinahe gänzlich den runden Teil bedeckt.

9. Deckel (10) nach einem der Ansprüche 1 bis 8, wobei das Etikett (22) eine Lasche aufweist, die von dem Deckel (10) vorragt, um das Lösen des Etiketts (22) von dem Deckel (10) zu erleichtern.

10. Becher oder sonstiger Behälter für Getränke, der von einem Deckel (10) nach einem der Ansprüche 1 bis 9 verschlossen wird.

11. Verfahren zur Herstellung eines Deckels (10) nach Anspruch 1 für ein Glas, einen Becher, eine Tasse oder sonstige Behälter für Getränke, wobei die Herstellung des Deckels (10) durch Formen erfolgt und das Verfahren die folgenden Schritte umfasst: i) Bereitstellen einer Form (40) mit einem Anguss (47) zum Leiten des Formmaterials in einen Hohlraum der Form (40), die eine Tiefe entsprechend der Dicke des Deckels (10) aufweist, wobei der Hohlraum (40) eine erste Zone und eine zweite Zone aufweist, die an die erste Zone angrenzt, wobei die Tiefe der ersten Zone größer ist als die Tiefe einer zweiten Zone und die erste Zone Ausgestaltungsmittel (45) zum Ausgestalten einer Öffnung (18) in dem Deckel (10) aufweist, ii) Bereitstellen eines Etiketts (22) in dem Hohlraum, wobei das Etikett (22) einen Bereich rund um den Anguss (47) und mindestens teilweise die Ausgestaltungsmittel (45) bedeckt, iii) Treiben des Formmaterials über eine der zwei Seiten des Etiketts (22) und iv) Erhalten des Deckels (10) mit dem Etikett (22), das mindestens einen Teil der Öffnung (18) des Deckels (10) und eine Fläche des Deckels (10) um die Öffnung (18) bedeckt.

12. Verfahren nach Anspruch 11, wobei der Anguss (47) in der ersten Zone liegt und wobei während des Formens das Formmaterial, das den Anguss (47) verlässt, die erste Zone schneller füllt als die zweite Zone.

13. Verfahren nach Anspruch 11 oder Anspruch 12, wobei der Anguss (47) in der ersten Zone liegt und wobei während des Formens das Formmaterial aus dem Anguss (47) zu der ersten Zone mit einem beinahe radialen Strom strömt.

14. Verfahren nach einem der Ansprüche 11 bis 13, wobei der Anguss (47) in der ersten Zone liegt und wobei während des Formens das Formmaterial aus dem Anguss (47) zu der ersten Zone entlang eines Weges strömt, der innerhalb der ersten Zone liegt.

15. Verfahren nach einem der Ansprüche 11 bis 14, wobei das Etikett (22) teilweise in dem Hohlraum platziert ist und eine Lasche des Etiketts (22) außerhalb des Hohlraums liegt.

## Revendications

1. Couvercle (10) pour un verre, un gobelet, une tasse ou un autre récipient, ledit couvercle (10) présentant une paroi (12, 14, 19) avec une ouverture (18) et une étiquette détachable (22) sur une zone de la paroi (12, 14, 19), ladite zone incluant l'ouverture (18), **caractérisé en ce que** l'épaisseur d'une première section continue et ininterrompue (60) de la paroi (12, 14, 19), qui est recouverte par l'étiquette (22), est supérieure à l'épaisseur d'au moins une seconde section de la paroi (12, 14, 19) qui est adjacente à la première section (60) et **en ce que** l'étiquette (22) est attachée à la paroi (12, 14, 19) par un processus d'étiquetage dans le moule pendant la production du couvercle (10).

2. Couvercle (10) selon la revendication 1, dans lequel la paroi (12, 14, 19) présente une paroi centrale (14), une paroi latérale (12) et une lèvre (19), l'ouverture (18) étant au moins partiellement située à une section élevée (16) de la paroi centrale (14) et est adjacente à la paroi latérale (12) et la première section continue et ininterrompue (60) inclut des zones de la paroi centrale (14), la paroi latérale (12) et la lèvre (19).

3. Couvercle (10) selon la revendication 1 ou 2, dans lequel l'épaisseur de la première section continue et ininterrompue (60) est supérieure de 10 % à 20 % à au moins l'épaisseur de la seconde section.

4. Couvercle (10) selon la revendication 3, dans lequel l'épaisseur de la seconde section est dans une plage de 0,3 mm à 2 mm.

5. Couvercle (10) selon l'une quelconque des revendications 1 à 4, dans lequel le matériau du couvercle (10) inclut du polypropylène et le matériau de l'étiquette (22) inclut du polypropylène multicouche.

6. Couvercle (10) selon l'une quelconque des revendications 1 à 5, dans lequel l'étiquette (22) a une face attachée à la paroi (12, 14, 19) et la face de l'étiquette (22) qui est attachée à la paroi (12, 15, 19) est presque entièrement recouverte par un revêtement de libération.

7. Couvercle (10) selon l'une quelconque des revendications 1 à 6, dans lequel l'étiquette (22) est presque rectangulaire.

8. Couvercle (10) selon l'une quelconque des revendications 1 à 6, dans lequel la paroi centrale (14) présente une portion circulaire et une portion annulaire autour de la portion circulaire et adjacente à celle-ci, et l'étiquette (22) recouvre presque entièrement la portion circulaire.

9. Couvercle (10) selon l'une quelconque des revendications 1 à 8, dans lequel l'étiquette (22) présente un rabat, qui fait saillie du couvercle (10) pour faciliter le détachement de l'étiquette (22) du couvercle (10).

10. Gobelet ou autre récipient pour des boissons, fermé par un couvercle (10) selon l'une quelconque des revendications 1 à 9.

11. Procédé de production d'un couvercle (10) selon la revendication 1, pour un verre, un gobelet, une tasse ou d'autres récipients pour des boissons, dans lequel la production du couvercle (10) est effectuée par moulage et le procédé comprend les étapes suivantes : i) la fourniture d'un moule (40) avec une grille (47) pour guider le matériau de moulage jusqu'à une cavité du moule (40) qui a une profondeur correspondant à l'épaisseur du couvercle (10), ladite cavité (40) présentant une première zone et une seconde zone qui est adjacente à la première zone, la profondeur de la première zone étant supérieure à la profondeur d'une seconde zone et la première zone présentant un moyen de configuration (45) pour configurer une ouverture (18) dans le couvercle (10), ii) la fourniture d'une étiquette (22) dans la cavité, ladite étiquette (22) recouvrant une région autour de la grille (47) et au moins partiellement le moyen de configuration (45), iii) le forçage du matériau de moulage sur l'une des deux faces de l'étiquette (22) et iv) l'obtention du couvercle (10) avec l'étiquette (22) recouvrant au moins une partie de l'ouverture (18) du couvercle (10) et une zone du couvercle (10) autour de l'ouverture (18).

12. Procédé selon la revendication 11, dans lequel la grille (47) est dans la première zone et dans lequel, pendant le moulage, le matériau de moulage sortant de la grille (47) remplit la première zone plus rapidement que la seconde zone.

13. Procédé selon la revendication 11 ou 12, dans lequel la grille (47) est dans la première zone et dans lequel, pendant le moulage, le matériau de moulage s'écoule de la grille (47) vers la première zone avec un écoulement presque radial.

14. Procédé selon l'une quelconque des revendications 11 à 13, dans lequel la grille (47) est dans la première zone et dans lequel, pendant le moulage, le matériau de moulage s'écoule de la grille (47) vers la première zone le long d'une voie qui est à l'intérieur de la première zone.

15. Procédé selon l'une quelconque des revendications 11 à 14, dans lequel l'étiquette (22) est placée partiellement dans la cavité et un rabat de l'étiquette (22) est à l'extérieur de la cavité.
